(19) Europäisches Patentamt
European Patent Office
Office européen des brevets

(11) EP 2 987 102 B1

(12) # FASCICULE DE BREVET EUROPEEN

(45) Date de publication et mention de la délivrance du brevet:
**26.01.2022 Bulletin 2022/04**

(21) Numéro de dépôt: **14722281.4**

(22) Date de dépôt: **16.04.2014**

(51) Classification Internationale des Brevets (IPC):
***F01D 5/14*** *(2006.01)* ***G06F 30/20*** *(2020.01)*
*G06F 113/28* *(2020.01)*

(52) Classification Coopérative des Brevets (CPC):
**F01D 5/14; G06F 30/20;** G06F 2113/28;
Y02T 50/60

(86) Numéro de dépôt international:
**PCT/FR2014/050934**

(87) Numéro de publication internationale:
**WO 2014/170612 (23.10.2014 Gazette 2014/43)**

(54) **PROCÉDÉ DE MODÉLISATION D'UNE PIÈCE, EN PARTICULIER UN AUBAGE**

VERFAHREN ZUM MODELLIEREN EINES BAUTEILS, INSBESONDERE EINER TURBINENSCHAUFEL

METHOD OF MODELING A WORKPIECE, IN PARTUCILAR A TURBINE BLADE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2013 FR 1353439**

(43) Date de publication de la demande:
**24.02.2016 Bulletin 2016/08**

(73) Titulaire: **Safran Aircraft Engines**
**75015 Paris (FR)**

(72) Inventeurs:
- **CELLIER, Damien, Joseph**
  **F-77550 Moissy-Cramayel Cedex (FR)**
- **PERROT, Vincent, Paul, Gabriel**
  **F-77550 Moissy-Cramayel Cedex (FR)**

(74) Mandataire: **Regimbeau**
**20, rue de Chazelles**
**75847 Paris Cedex 17 (FR)**

(56) Documents cités:
**WO-A1-2007/011355**

- **K C Giannakoglou: "A Design Method For Turbine Blades Using Genetic Algorithms On Parallel Computers", Computational Fluid Dynamics, 1 janvier 1998 (1998-01-01), pages 1-6, XP055099589, Extrait de l'Internet: URL:http://velos0.ltt.mech.ntua.gr/research/pdfs/3_041.pdf [extrait le 2014-01-31]**
- **DUCCIO BONAIUTI ET AL: "Analysis and Optimization of Transonic Centrifugal Compressor Impellers Using the Design of Experiments Technique", JOURNAL OF TURBOMACHINERY, vol. 128, no. 4, 1 janvier 2006 (2006-01-01), page 786, XP055010480, ISSN: 0889-504X, DOI: 10.1115/1.1579507**

EP 2 987 102 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

DOMAINE TECHNIQUE GENERAL

La présente invention concerne la conception assistée par ordinateur.

Plus précisément, elle concerne un procédé de modélisation d'une pièce, en particulier un aubage.

ETAT DE L'ART

La nécessité d'amélioration constante des performances des équipements, en particulier aéronautiques, par exemple des rotors de turbomachines (c'est-à-dire l'ensemble formé d'un moyeu sur lequel sont fixées des aubes s'étendant radialement, tel que visible sur la **figure 1a**), a aujourd'hui imposé l'utilisation d'outils informatiques de modélisation.

Ces outils permettent d'aider à concevoir des pièces en optimisant de façon automatisée certaines de leurs caractéristiques. Pour un aubage (c'est-à-dire l'ensemble formé des pales d'un disque de turbomachine, dont un fragment est représenté sur la **figure 1b**), le principe est de déterminer un optimum géométrique aéromécanique et/ou acoustique, de lois d'une pale de l'aubage, en d'autres termes d'une ou plusieurs courbes décrivant la valeur d'une grandeur physique (des exemples seront donnés plus loin) le long d'une coupe ou d'une hauteur de la pale, dans un environnement donné, par l'exécution d'un grand nombre de calculs de simulation.

Pour cela il est nécessaire de paramétriser la loi que l'on cherche à optimiser, c'est-à-dire d'en faire une fonction de $N$ paramètres d'entrée. L'optimisation consiste alors à faire varier (en général aléatoirement) ces différents paramètres sous contrainte, jusqu'à déterminer leurs valeurs optimales pour un critère prédéterminé. Une courbe « lissée » est ensuite obtenue par interpolation à partir des points de passage déterminés.

Le nombre de calculs nécessaires est alors directement lié (linéairement voire exponentiellement) au nombre de paramètres d'entrée du problème.

De nombreuses méthodes de paramétrisation d'une loi existent, et on peut en particulier distinguer deux grandes catégories :

- Modèle discret : la loi est définie par la position d'une pluralité de points (en pratique 5 à 10 pour une loi sur la hauteur, et 50 à 200 pour une coupe), déplacés un à un lors de l'optimisation ;
- Modèle paramétrique : la loi est définie via des courbes mathématiques connues dans la littérature, telles que les courbes de Bézier ou les courbes NURBS (B-splines rationnelles non uniformes).

Le document K C Giannakoglou: "A Design Method For Turbine Blades Using Genetic Algorithms On Parallel Computers", Computational Fluid Dynamics, 1 janvier 1998 (1998-01-01), pages 1-6, divulgue la paramétrisation d'une courbe de classe C1 représentant la valeur d'une grandeur physique caractéristique d'une pièce en fonction d'une position le long d'une partie de la pièce, la courbe étant définie par des points extrémaux définissant l'étendue de ladite partie de la pièce, des points intermédiaire disposé entre les points extrémaux, et deux courbes de Bézier connectées par des segments de cercle.

Il est souhaitable d'utiliser un grand nombre de paramètres pour améliorer d'autant la qualité d'une loi (c'est un enjeu majeur pour les conceptions d'aubages), mais une telle démarche est rapidement limitée par la capacité et les ressources des processeurs actuels.

Même en utilisant des supercalculateurs onéreux, le temps nécessaire à la modélisation d'une seule loi est conséquent.

Autre problème, on constate qu'en présence d'un grand nombre de paramètres des problèmes apparaissent : les lois déterminées présentent en effet un trop grand nombre de points de passage à respecter, et les premières courbes obtenues sont anormalement « ondulées » (c'est ce que l'on appelle le phénomène de Runge) et inexploitables en l'état. Il faut les retravailler jusqu'à ce qu'elles soient suffisamment lisses, ce qui augmente encore le délai nécessaire à l'obtention des résultats

Pour toutes ces raisons, les représentations paramétriques (utilisant des courbes mathématiques) sont quasiment exclusivement utilisées puisqu'on constate qu'elles nécessitent jusqu'à cinq fois moins de paramètres pour modéliser à qualité égale une loi.

On constate toutefois que même avec des représentations paramétriques de haut niveau, le nombre de paramètres requis pour avoir une qualité de modélisation suffisante pour les standards actuels reste problématique (une dizaine de paramètres).

Il serait souhaitable de trouver une façon de paramétriser et optimiser les lois d'une pale (ou de toute autre pièce) qui soit encore plus économe en termes d'utilisation de ressources informatique, qui permette de maintenir voire d'augmenter la qualité de modélisation, et ce tout en limitant les risques d'apparition de courbes « ondulées ».

PRESENTATION DE L'INVENTION

La présente invention est définie par les revendications jointes.

Les courbes de Bézier sont des courbes polynomiales paramétriques définies comme combinaisons de $N+1$ polynômes élémentaires dits Polynômes de Bernstein : on définit une courbe de Bézier par l'ensemble de points $\sum_{i=0}^{N} B_i^N(t) \cdot \boldsymbol{P}_i, t \in [0,1]$, les $B_i^N(t) = \binom{N}{i} t^N (1-t)^{N-i}$ étant les $N+1$ polynômes de Bernstein de degré N.

Les points $\{P_0, P_1 ... P_N\}$ sont appelés points de

contrôle « implicites » de la courbe et constituent les variables grâce auxquelles une loi d'une pale peut être modélisée par une courbe de Bézier.

Ces points sont appelés « implicites » car une courbe de Bézier peut être vue comme l'ensemble des barycentres des *N+1* points de contrôle pondérés d'un poids égal à la valeur du polynôme de Bernstein associé à chaque point de contrôle. En d'autres termes, ces points agissent comme des poids localisés attirants la courbe généralement sans qu'elle n'y passe (hormis le premier et le dernier, correspondant respectivement à $t=0$ et $t=1$, et certains cas d'alignement de points).

De façon générale, dans les techniques de modélisation connues d'une loi utilisant une courbe de Bézier, les points de contrôle extrémaux $P_0$ et $P_N$ de la courbe utilisée sont fixés (ils définissent l'étendue de la partie d'une pièce, en particulier une pale d'aubage, sur laquelle la modélisation va être mise en œuvre), mais les autres points $\{P_1...P_{N-1}\}$ présentent des coordonnées mobiles constituant les paramètres d'entrée pour l'algorithme d'optimisation.

Le présent procédé de modélisation propose de paramétriser une loi non pas via les points de contrôle implicite d'une courbe de Bézier complexe, mais via seulement des points de raccords (dits « Points de Contrôle Utilisateur (PCU) Intermédiaires ») d'une pluralité de courbes de Bézier élémentaires.

En outre, contrairement à l'art antérieur qui ne proposait de définir les points de contrôle que par leurs coordonnées (x, y), le présent procédé propose avantageusement d'utiliser également des critères par exemple liés aux tangentes comme paramètres d'entrée supplémentaires.

En d'autres termes, au lieu de modéliser une loi via les seules positions d'un grand nombre de points de contrôle implicites, on utilise jusqu'à cinq paramètres d'un petit nombre de points de contrôle explicites.

Les **figures 2a et 2b** illustrent ce principe en comparant les points de contrôle nécessaires dans un procédé connu et dans le procédé selon l'invention. La demanderesse a ainsi constaté que cette nouvelle technique permet, avec deux fois moins de paramètres (voire dans certains cas 60% de moins), d'obtenir une qualité de modélisation équivalente. Le temps et/ou la puissance de calcul nécessaire sont donc sensiblement réduits.

Par ailleurs, indépendamment du nombre de paramètres, le nombre de points de contrôle est quant à lui réduit d'un facteur trois voire quatre (puisque les points de contrôle intermédiaires concentrent un plus grand nombre de paramètres). Le problème de l'effet indésirable « d'ondulations » résultant d'un trop grand nombre de points de passage de la courbe est ainsi largement résolu.

Selon d'autres caractéristiques avantageuses et non limitatives :

- le ou les paramètres définissant un point intermédiaire sont choisis parmi une abscisse du point, une ordonnée du point, une orientation de tangente à la courbe au niveau du point et deux coefficients de tension chacun associé à une demi-tangente à la courbe au niveau du point ;
- la paramétrisation est également mise en œuvre selon un ou plusieurs paramètres définissant au moins un des points extrémaux ;
- le ou les paramètres définissant un point extrémal sont choisis parmi une abscisse du point, une ordonnée du point, une orientation de tangente à la courbe au niveau du point et un coefficient de tension associé à une demi-tangente à la courbe au niveau du point ;
- un coefficient de tension associé à une demi-tangente à la courbe au niveau d'un point intermédiaire ou extrémal est fonction d'une valeur de dérivée seconde de la courbe au voisinage du point ;
- ladite courbe est définie par *K-1* points intermédiaires ordonnés selon le parcours de ladite partie de pièce, et *K* courbes de Bézier, avec $K \geq 2$ ;
- la 1ère courbe de Bézier est définie sur l'intervalle compris entre le point extrémal associé au début de ladite partie de pièce et le 1er point intermédiaire, la *Kième* courbe de Bézier est définie sur l'intervalle compris entre le *K-1ième* point intermédiaire et le point extrémal associé à la fin de ladite partie de pièce ;
- $K \geq 3$, la ou les i ièmes courbes de Bézier étant chacune définie sur l'intervalle compris entre le *i-1ième* point intermédiaire et le *iième* point intermédiaire ;
- chaque courbe de Bézier est entièrement déterminée par les points définissant ses extrémités ;
- la pièce est choisie parmi un aubage, une plateforme de turbomachine, un rétroviseur, un aileron, une voilure fixe ou tournante, un empennage, un fuselage, une hélice, une tuyère, une veine, un carénage, et une turbine ;
- la pièce est un aubage, la partie de pièce étant une partie d'une pale de l'aubage ;
- ladite partie de pale d'aubage est une partie de coupe de la pale de l'aubage ou de hauteur de la pale de l'aubage ;
- ladite grandeur physique caractéristique dudit aubage est choisie parmi l'épaisseur de l'aubage, le squelette, la loi d'angle squelette d'une coupe d'une pale de l'aubage, la loi d'épaisseur maximale, la loi de position de l'épaisseur maximale, les angles flèche et dièdre, la loi d'empilage, les angles amont/aval de la pale de l'aubage selon la hauteur.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1a précédemment décrite représente un exemple de turbomachine ;
- la figure 1b précédemment décrite représente un exemple d'aubage pour lequel le procédé selon l'invention est mis en œuvre ;
- les figures 1c-1d illustrent une coupe d'une pale d'un aubage ;
- les figures 2a-2b précédemment décrites comparent la paramétrisation d'une courbe dans un procédé de l'art antérieur et dans un procédé selon l'invention ;
- la figure 3 représente un système pour la mise en œuvre du procédé selon l'invention ;
- la figure 4 représente une courbe utilisée par le procédé selon l'invention ;
- les figures 5a-5e sont des exemples illustrant la mise en œuvre de l'invention pour une loi d'épaisseur sur une pale d'aubage ;
- les figures 6a-6e sont des exemples illustrant la mise en œuvre de l'invention pour une loi d'angle squelette sur une pale d'aubage.

DESCRIPTION DETAILLEE

De façon générale, on comprendra que le présent procédé est destiné à la modélisation, optimisation et fabrication d'une pièce de turbomachine, c'est à dire d'un aubage (n'importe quel aubage).

Sur la figure 1b, l'aubage 1 présente une pluralité de pales 2 (on voit la base d'une) s'étendant radialement depuis une partie centrale de disque. La **figure 1c** représente un détail d'une pale 2 sur laquelle a été identifiée une « coupe » de la pale 2, qui s'étend de puis un bord d'attaque BA vers un bord de fuite BF. Par coupe, on entend une section transversale de la pale 2.

**La figure 1d** représente plus précisément cette coupe BA-BF (on remarque le profil concave-convexe). Il est à noter la « corde » c'est-à-dire la ligne droite qui relie les points extrémaux de la coupe. Cette corde servira comme on le verra plus loin de repère pour situer les points le long de la coupe. On voit également sur cette figure 1d une ligne médiane, le « squelette » de la pale 2. Orthogonalement à une coupe, on trouve la « hauteur » de la pale 2. Plusieurs grandeurs physiques de la pale sont également représentées, et seront décrites plus loin. Comme expliqué, ces grandeurs peuvent être modélisées le long d'une coupe ou d'une hauteur de la pale 2.

Un tel aubage est modélisé, lors de sa conception, via un équipement informatique 10 du type de celui représenté sur la **figure 3**. Il comprend des moyens de traitement de données 11 (un ou plusieurs processeur), des moyens de stockage de données 12 (par exemple un ou plusieurs disques dur), des moyens d'interface 13 (composés de moyens de saisie tels qu'un clavier et une souris ou une interface tactile, et de moyens de restitution tels qu'un écran pour affichage des résultats). De façon avantageuse, l'équipement 10 est un supercalculateur, mais on comprendra qu'une mise en œuvre sur des plateformes variées est tout à fait possible.

De nombreux critères peuvent être choisis comme critères à optimiser lors de la modélisation d'une pale ou d'une autre pièce. A titre d'exemple, dans le cas d'une pale on pourra tenter le maximiser des propriétés mécaniques telles que la résistance aux contraintes mécaniques, les réponses fréquentielles de l'aube, les déplacements de la pale, des propriétés aérodynamiques telles que le rendement, l'élévation de pression, la capacité de débit ou la marge au pompage, etc.

*Paramétrisation*

Une étape (a), mise en œuvre par les moyens de traitement de données 11 sous contrôle d'un opérateur, est une première étape de paramétrisation d'une courbe représentant la valeur d'une grandeur physique caractéristique dudit aubage 1 (ou de toute autre pièce) en fonction d'une position le long d'au moins une partie d'une pale 2 de l'aubage 1 (de façon générale une partie de la pièce), en particulier une partie d'une coupe ou d'une hauteur de la pale 2. Par « partie de coupe », on entend tout ou partie de l'espace s'étendant du bord d'attaque BA au bord de fuite BF. Par « partie de hauteur », on entend tout ou partie de l'espace s'étendant de l'extrémité proximale à l'extrémité distale de la pale 2.

Dans la suite de la présente description, on prendra l'exemple de la coupe d'une pale 2, mais on comprendra que le procédé est transposable à tout sous-espace défini de la pièce.

Comme expliqué précédemment, la position le long de la courbe est exprimée en fonction de la longueur de corde (en abscisse), et plus précisément la longueur de corde « normalisée », c'est-à-dire exprimée entre 0 et 1 lorsque l'on traverse la pale 2, à parcourir pour atteindre la projection (orthogonale) de ce point sur la corde. Cela correspond en d'autres termes à la coordonnées x qu'aurait un point de la coupe dans un repère orthonormé dans lequel le point BA aurait (0,0) comme coordonnées, et le point BF (0,1). Par exemple, un point de la coupe associé à une longueur de corde normalisée de « 0,5 » est sur la médiatrice de la corde. On note que comme la courbe peut s'étendre sur une partie seulement (continue) de la coupe de la pale 2, la fonction associée est définie sur un sous-intervalle de [0, 1].

On comprendra toutefois que l'invention n'est aucunement limitée à l'expression d'une courbe représentant la valeur d'une grandeur en fonction d'une longueur de corde, et que d'autres repères sont possibles.

Cette courbe représentant la valeur d'une grandeur physique doit être comprise comme la modélisation d'une loi de cette grandeur physique (elle sera à ce titre désignée sous le nom de « courbe de modélisation » pour la distinguer des courbes de Bézier en termes de terminologie). Ladite grandeur physique peut être n'importe quelle grandeur ayant une signification aéromécanique et/ou acoustique pour la conception de pièces, et on citera à titre d'exemples non limitatifs dans le cas d'un

aubage :

- Fonction de la corde (vision coupe)
    - Loi d'épaisseur
    - Loi d'angle squelette
- Fonction de la hauteur de pale (vision 3D)
    - Epaisseur max, position de l'épaisseur max
    - Lois de flèche et dièdre (BA, BF, ...)
    - Loi d'empilage des coupes
    - Lois d'angles amont/aval ($\beta$1, $\beta$2)

Des exemples associés seront décrits plus loin.

Dans le cas où la pièce 1 est une tuyère, la grandeur physique peut être la section de la tuyère, ce qui permet de définir la section minimale de la tuyère, contrôler l'évolution du nombre de Mach efficace dans la tuyère, etc. Dans le cas d'une veine, la grandeur physique peut être la section de la veine, le rapport de section (section d'entrée / section de sortie), le ralentissement (qui est le rapport entre la vitesse de sortie et la vitesse d'entrée. Ce paramètre permet, entre autre, de juger de la facilité qu'aura le fluide à suivre des variations d'angle demandées).

La courbe de modélisation est de classe de régularité au moins $C^1$, c'est-à-dire qu'elle correspond à une fonction continue et au moins de 1ère dérivée continue sur son espace de définition (la partie de la pièce). On verra plus loin l'importance de cette condition. En pratique, la courbe obtenue est $C^\infty$ par morceaux (fonctions indéfiniment dérivables sur chaque intervalle), avec continuité de la courbe et de la dérivée au niveau des raccords (les points de contrôle intermédiaires). On comprendra qu'il s'agit de conditions minimales et que la courbe peut tout à fait être par exemple $C^\infty$ sur l'ensemble de son espace de définition.

La courbe est définie grâce à ses points de contrôle. Comme dans l'art antérieur, deux points de contrôle utilisateur extrémaux $PCU_0$ et $PCU_K$ sont fixés et définissent l'étendue de la partie de la pièce (i.e. le domaine de définition de la courbe). La courbe de modélisation comprend en outre au moins un point de contrôle utilisateur intermédiaire $PCU_i$, $i \in [\![1, K-1]\!]$ disposé entre ces deux points extrémaux $PCU_0$ et $PCU_K$.

Le ou les points intermédiaires sont des points de contrôle « explicite », car la courbe y passe. En effet, cette dernière comprend au moins deux courbes de Bézier connectées au niveau dudit point intermédiaire.

Comme l'on voit par exemple à la **figure 4**, la courbe de modélisation peut être constituée seulement d'une séquence de courbes de Bézier, chacune s'étendant entre un point extrémal extrémaux $PCU_0$, $PCU_K$ et un point intermédiaire $PCU_i$, ou entre deux points intermédiaires $PCU_i$ et $PCU_{i+1}$.

En d'autres termes, tous les points de contrôle utilisateur $PCU_0$, $PCU_1$ ... $PCU_{K-1}$, $PCU_K$ (extrémaux ou intermédiaires) de la courbe sont des points de contrôle extrémaux $P_0$, $P_N$ d'une courbe de Bézier.

Le fait que la courbe soit de classe C1 impose que chaque point intermédiaire $PCU_i$ assure une continuité y compris sur la dérivée (même tangente).

Comme on verra dans les exemples, l'utilisation d'un seul point intermédiaire $PCU_1$ (et donc de deux courbes de Béziers) suffit à définir de façon très satisfaisante la courbe représentant une loi. On comprendra toutefois que le procédé est généralisable à l'utilisation de *K-1* (avec $K \geq 2$) points intermédiaires ($PCU_i$, $i \in [\![1, K-1]\!]$) ordonnés selon le parcours de ladite partie de pièce 1 (une pale 2 dans le cas d'un aubage), c'est-à-dire *K* courbes de Bézier (une entre chaque couple de points de contrôle $\{PCU_i; PCU_{i+1}\}$).

Dans tous les cas, la courbe de modélisation comprend au moins deux courbes de Bézier « extrémales », c'est-à-dire ayant pour extrémité un des deux points de contrôle utilisateur extrémaux $PCU_0$ et $PCU_K$: la 1ère courbe de Bézier est définie sur l'intervalle compris entre le point extrémal $PCU_0$ associé au début de ladite partie de pièce 1 et le 1er point intermédiaire $PCU_1$, et la *Kième* courbe de Bézier (l'autre courbe extrémale) est définie sur l'intervalle compris entre le *K-1ième* point intermédiaire $PCU_{K-1}$ et le point extrémal $PCU_K$ associé à la fin de ladite partie de pièce 1.

Dans le cas d'au moins deux points intermédiaires $PCU_i$, en d'autres termes lorsque $K \geq 3$, la courbe de modélisation comprend des courbes de Bézier « intermédiaires » : les i ièmes ($\forall i \in [\![2, K-1]\!]$) courbes de Bézier sont chacune définie sur l'intervalle compris entre le *i-1ième* point intermédiaire $PCU_{i-1}$ et le *ième* point intermédiaire $PCU_i$.

*Paramètres d'un point de contrôle utilisateur*

Le traitement paramétrise la courbe de modélisation non pas en fonction des paramètres de points de contrôle implicites d'une courbe de Bézier, mais en fonction de paramètres de points de contrôle intermédiaires (et éventuellement extrémaux) définissant des extrémités de courbes de Béziers constituant la courbe de modélisation.

En particulier, chaque courbe de Bézier peut être entièrement déterminée par les points PCU définissant ses extrémités. En d'autres termes, les paramètres des points PCU (en termes de coordonnées, et de dérivées) servent de conditions aux limites pour le calcul par les moyens de traitement de données 11 des coordonnées des points de contrôle implicite des différentes courbes de Bézier, qui sont choisies du degré minimal suffisant pour satisfaire ces conditions limites. L'étape (a) comprend alors la définition des points implicites des

courbes de Bézier en fonction des paramètres des points PCU constituant leurs extrémités.

Le ou les paramètres définissant un point intermédiaire $PCU_i$ sont ainsi choisis parmi une abscisse du point, une ordonnée du point, une orientation de tangente à la courbe au niveau du point et deux coefficients de tension chacun associé à une demi-tangente à la courbe au niveau du point.

Sachant que la courbe est de classe $C^1$ (dérivée continue), l'orientation de la tangente doit être la même de part et d'autre d'un point intermédiaire $PCU_i$. En revanche, la « longueur » des deux demi-tangentes peut être différente de part et d'autre du point, longueur qui traduit la propension de chaque courbe de Bézier de part et d'autre du point à « coller » à la tangente. C'est ce que modélisent les « coefficients de tension » évoqués précédemment.

De façon concrète, chaque coefficient de tension associé à une demi-tangente à la courbe au niveau d'un point intermédiaire est fonction d'une valeur de dérivée seconde de la courbe au voisinage du point. En effet, la valeur de la dérivée seconde au voisinage du point de contrôle traduit la « vitesse » avec laquelle la courbe s'écarte de la tangente.

Et le fait que la courbe de modélisation ne soit pas forcément de classe $C^2$ autorise des discontinuités de dérivée seconde au niveau des points intermédiaires.

Dans le cas d'un point extrémal $PCU_0$ ou $PCU_K$ paramétrisé, le ou les paramètres définissant ce point extrémal sont choisis parmi une abscisse du point, une ordonnée du point, une orientation de tangente à la courbe au niveau du point et un coefficient de tension associé à une demi-tangente à la courbe au niveau du point.

En d'autres termes, on ne peut prendre en compte que la demi-tangente dans le domaine de définition de la courbe (celle à droite pour $PCU_0$ et celle à gauche pour $PCU_K$).

Il est à noter que tous les paramètres évoqués précédemment ne sont pas nécessairement effectivement utilisés (en particulier pour les points extrémaux). En effet, dans la majorité des cas, un ou plusieurs de ces paramètres (une abscisse du point, une ordonnée du point, une orientation de tangente à la courbe au niveau du point et deux coefficients de tension chacun associé à une demi-tangente à la courbe au niveau du point) présentent une valeur prédéterminée fixée par l'utilisateur, et ne sont donc pas utilisés comme « variables » pour la suite du procédé.

*Exemples*

Les **figures 5a-5e** représentent différentes courbes qui peuvent être utilisées pour la modélisation de la loi d'une grandeur appelée « loi d'angle squelette ($\beta$) », qui correspond à la dérivée du squelette de la coupe de la pale 2 (voir figure 1d).

Sur la figure 5a, la loi est modélisée en utilisant un seul point intermédiaire $PCU_1$, avec une tension supérieure à droite par rapport à gauche.

Sur la figure 5b, le paramètre pris en compte est la cordonnée y du point intermédiaire $PCU_1$. 3 instances de la courbe correspondant à trois valeurs différentes de ce paramètre sont représentées.

Sur la figure 5c, le paramètre pris en compte est l'orientation de la tangente à courbe au niveau du point intermédiaire $PCU_1$ (en d'autres termes la valeur de la dérivée en ce point). 3 instances de la courbe correspondant à trois valeurs différentes de ce paramètre sont représentées.

Sur la figure 5d, deux paramètres sont pris en compte, à savoir les coefficients de tension chacun associé à une demi-tangente à la courbe au niveau du point intermédiaire $PCU_1$. 3 instances de la courbe correspondant à trois couples de valeurs pour ces paramètres sont représentées.

La figure 5e représente une alternative dans laquelle deux points intermédiaires $PCU_1$ et $PCU_2$ sont utilisés.

Les **figures 6a-6e** représentent différentes courbes qui peuvent être utilisées pour la modélisation de la loi d'une autre grandeur appelée « loi d'épaisseur », qui correspond simplement à l'épaisseur de la pale 2 le long de la coupe.

Sur la figure 6a, la loi est modélisée en utilisant un seul point intermédiaire $PCU_1$, avec une tangente horizontale (maximum local).

Sur la figure 6b, le paramètre pris en compte est la cordonnée y du point intermédiaire $PCU_1$. 3 instances de la courbe correspondant à trois valeurs différentes de ce paramètre sont représentées.

Sur la figure 6c, le paramètre pris en compte est la cordonnée x du point intermédiaire $PCU_1$. 3 instances de la courbe correspondant à trois valeurs différentes de ce paramètre sont représentées. On remarque l'adaptation des deux courbes de Béziers de part et d'autre du point intermédiaire $PCU_1$ de sorte à respecter les conditions imposées par les paramètres de ce point.

Sur la figure 6d, on a à nouveau la prise en compte des deux coefficients de tension chacun associé à une demi-tangente à la courbe au niveau du point intermédiaire $PCU_1$. 3 instances de la courbe correspondant à trois couples de valeurs pour ces paramètres sont représentées. On remarque notamment une courbe pour laquelle les coefficients sont particulièrement déséquilibrés, d'où une asymétrie particulièrement visible de la courbe.

La figure 6e représente une alternative très avancée dans laquelle trois points intermédiaires $PCU_1$, $PCU_2$ et $PCU_3$ sont utilisés.

*Optimisation et restitution*

Selon une deuxième étape (b), le procédé comprend une étape de détermination par les moyens de traitement de données 11 de valeurs optimisées (et si possible optimales) desdits paramètres de ladite courbe.

Il s'agit d'une étape d'optimisation.

De nombreuses techniques pour la mise en œuvre de cette étape sont connues de l'homme du métier, et on pourra par exemple simplement faire varier pseudo-aléatoirement les paramètres choisis variables tout en effectuant des simulations pour déterminer ces valeurs optimisées (c'est-à-dire pour lesquelles le critère choisi est maximalisé) des paramètres des points de contrôle $PCU_i$. L'invention n'est toutefois pas limitée à cette possibilité.

Dans une dernière étape (c), les valeurs déterminées des paramètres sont restituées par les moyens d'interface 13 de l'équipement 10 pour exploitation, par exemple par l'affichage de la courbe de modélisation dans laquelle les paramètres sont mis à ces valeurs optimisées.

Alternativement, les moyens d'interface 13 peuvent seulement afficher ces valeurs numériques.

*Procédé de fabrication et pièce*

Une fois modélisée, la pièce 1 peut être fabriquée. Est ainsi proposé un procédé de fabrication d'une pièce 1 (en particulier un aubage), le procédé comprenant des étapes de :

- Mise en œuvre du procédé selon le premier aspect de sorte à modéliser au moins une partie de la pièce 1 (une partie d'une pale 2 de l'aubage) ;
- Fabrication de ladite pièce 1 conformément à la modélisation de l'au moins une partie de la pièce 1 obtenue.

Un aubage 1 comprenant une pluralité de pales 2 ainsi produite peut être obtenue. Elle présente les propriétés physiques optimales souhaitées.

*Equipement*

L'équipement 10 (représenté sur la figure 4) pour la mise en œuvre du procédé de modélisation d'une pièce 1 comprend des moyens de traitement de données 11 configurés pour mettre en œuvre un procédé selon l'une des revendications jointes.

## Revendications

**1.** Procédé de fabrication d'une pièce (1), la pièce (1) étant un aubage, le procédé étant **caractérisé en ce qu'**il comprend :

- la modélisation d'au moins une partie de la pièce (1), la partie de pièce (1) étant une partie de coupe de la pale (2) de l'aubage ou de hauteur de la pale (2) de l'aubage, comprenant la mise en œuvre, par des moyens de traitement de données (11) d'un équipement (10), d'étapes de :

(a) Paramétrisation d'une courbe de classe $C^1$ représentant la valeur d'une grandeur physique caractéristique de ladite pièce (1) en fonction d'une position le long de ladite partie de la pièce (1), ladite grandeur physique ayant une signification aéromécanique et/ou acoustique pour la conception de la pièce (1), ladite grandeur physique caractéristique dudit aubage (1) est choisie parmi l'épaisseur de l'aubage (1), le squelette, la loi d'angle squelette d'une coupe d'une pale (2) de l'aubage (1), la loi d'épaisseur maximale, la loi de position de l'épaisseur maximale, les angles flèche et dièdre, la loi d'empilage, et les angles amont/aval de la pale (2) de l'aubage (1) selon la hauteur, la courbe étant définie par :

a. Deux points extrémaux ($PCU_0$, $PCU_K$) définissant l'étendue de ladite partie de la pièce (1) ;

b. Au moins un point intermédiaire ($PCU_i$, $i \in [\![1, K-1]\!]$) disposé entre les points extrémaux ($PCU_0$, $PCU_K$) ;

c. Au moins deux courbes de Bézier connectées au niveau dudit point intermédiaire ;

la paramétrisation étant mise en œuvre selon un ou plusieurs paramètres définissant ledit point intermédiaire;

(b) Détermination de valeurs optimisées desdits paramètres de ladite courbe pour un critère choisi parmi la résistance aux contraintes mécaniques, les réponses fréquentielles de l'aube, les déplacements de la pale, des propriétés aérodynamiques telles que le rendement, l'élévation de pression, la capacité de débit ou la marge au pompage ;

(c) Restitution sur une interface (13) dudit équipement (10) des valeurs déterminées ;

- la fabrication de ladite pièce (1) conformément à la modélisation de l'au moins une partie de la pièce (1) obtenue.

**2.** Procédé selon la revendication 1, dans lequel le ou les paramètres définissant un point intermédiaire ($PCU_i$) sont choisis parmi une abscisse du point, une ordonnée du point, une orientation de tangente à la courbe au niveau du point et deux coefficients de tension chacun associé à une demi-tangente à la

courbe au niveau du point.

**3.** Procédé selon l'une des revendications 1 et 2, dans lequel la paramétrisation est également mise en œuvre selon un ou plusieurs paramètres définissant au moins un des points extrémaux ($PCU_0$, $PCU_K$).

**4.** Procédé selon la revendication 3, dans lequel le ou les paramètres définissant un point extrémal ($PCU_0$, $PCU_K$) sont choisis parmi une abscisse du point, une ordonnée du point, une orientation de tangente à la courbe au niveau du point et un coefficient de tension associé à une demi-tangente à la courbe au niveau du point.

**5.** Procédé selon l'une des revendications 2 et 4, dans lequel un coefficient de tension associé à une demi-tangente à la courbe au niveau d'un point intermédiaire ou extrémal est fonction d'une valeur de dérivée seconde de la courbe au voisinage du point.

**6.** Procédé selon l'une des revendications 1 à 5, dans lequel ladite courbe est définie par *K-1* points intermédiaires ($PCU_i$, $i \in [\![1, K-1]\!]$) ordonnés selon le parcours de ladite partie de la pièce (1), et *K* courbes de Bézier, avec $K \geq 2$.

**7.** Procédé selon la revendication 6, dans lequel la 1ère courbe de Bézier est définie sur l'intervalle compris entre le point extrémal ($PCU_0$) associé au début de ladite partie de la pièce (1) et le 1er point intermédiaire ($PCU_1$), la *K*ième courbe de Bézier est définie sur l'intervalle compris entre le *K-1*iéme point intermédiaire ($PCU_{K-1}$) et le point extrémal ($PCU_K$) associé à la fin de ladite partie de la pièce (1).

**8.** Procédé selon la revendication 7, dans lequel $K \geq 3$, la ou les i ièmes ($i \in [\![2, K-1]\!]$) courbes de Bézier étant chacune définie sur l'intervalle compris entre le *i-1*ième point intermédiaire ($PCU_{i-1}$) et le *i*ème point intermédiaire ($PCU_i$).

**9.** Procédé selon l'une des revendications 1 à 8, dans laquelle chaque courbe de Bézier est entièrement déterminée par les points (PCU) définissant ses extrémités.

## Patentansprüche

**1.** Verfahren zur Herstellung eines Bauteils (1), wobei das Bauteil (1) eine Turbinenschaufel ist, wobei das Verfahren **dadurch gekennzeichnet ist, dass** es Folgendes umfasst:

- Modellieren wenigstens eines Teils des Bauteils (1), wobei der Teil des Bauteils (1) ein Teil eines Schnitts des Blatts (2) der Turbinenschaufel oder einer Höhe des Blatts (2) der Turbinenschaufel ist, umfassend das Umsetzen, durch Datenverarbeitungsmittel (11) einer Einrichtung (10), folgender Schritte:

(a) Parametrieren einer Kurve der Klasse $C^1$, die den Wert einer charakteristischen physikalischen Größe des Bauteils (1) in Abhängigkeit von einer Position entlang dem Teil des Bauteils (1) darstellt, wobei die physikalische Größe eine aeromechanische und/oder akustische Bedeutung für die Gestaltung des Bauteils (1) aufweist, wobei die charakteristische physikalische Größe der Turbinenschaufel (1) ausgewählt wird aus der Dicke der Turbinenschaufel (1), dem Skelett, dem Skelettwinkelgesetz eines Schnitts eines Blatts (2) der Turbinenschaufel (1), dem Gesetz der maximalen Dicke, dem Gesetz der Position der maximalen Dicke, den Pfeilungs- und Diederwinkeln, dem Stapelgesetz und den stromaufwärtigen/stromabwärtigen Winkeln des Blatts (2) der Turbinenschaufel (1) gemäß der Höhe, wobei die Kurve definiert wird durch:

a. Zwei Endpunkte ($PCU_0$, $PCU_K$), welche die Ausdehnung des Teils des Bauteils (1) definieren;

b. Wenigstens einen Zwischenpunkt ($PCU_i$, $i \in [\![1, K-1]\!]$), der zwischen den Endpunkten ($PCU_0$, $PCU_K$) angeordnet ist;

c. Wenigstens zwei Bézierkurven, die auf Höhe des Zwischenpunkts verbunden sind;

wobei das Parametrieren gemäß einem oder mehreren Parametern umgesetzt wird, die den Zwischenpunkt definieren;

(b) Bestimmen von optimierten Werten der Parameter der Kurve für ein Kriterium, das ausgewählt wird aus der Beständigkeit gegen mechanische Beanspruchungen, den Frequenzgängen der Turbinenschaufel, den Bewegungen des Blatts, den aerodynamischen Eigenschaften wie Wirkungsgrad, Erhöhung des Drucks, Durchflusskapazität oder Pumpgrenze;

(c) Wiedergeben, auf einer Schnittstelle (13) der Einrichtung (10), der bestimmten Werte;

- Herstellen des Bauteils (1) entsprechend der erhaltenen Modellierung des wenigstens einen Teils des Bauteils (1).

**2.** Verfahren nach Anspruch 1, wobei der oder die Parameter, die einen Zwischenpunkt ($PCU_i$) definieren, ausgewählt werden aus einer Abszisse des Punkts, einer Ordinate des Punkts, einer Orientierung der Tangente zur Kurve auf Höhe des Punkts und zwei Spannungskoeffizienten, die jeweils mit einer Halbtangente zur Kurve auf Höhe des Punkts assoziiert sind.

**3.** Verfahren nach einem der Ansprüche 1 und 2, wobei die Parametrierung ebenfalls gemäß einem oder mehreren Parametern umgesetzt wird, die wenigstens einen der Endpunkte ($PCU_0$, $PCU_K$) definieren.

**4.** Verfahren nach Anspruch 3, wobei der oder die Parameter, die einen Endpunkt ($PCU_0$, $PCU_K$) definieren, ausgewählt werden aus einer Abszisse des Punkts, einer Ordinate des Punkts, einer Orientierung der Tangente zur Kurve auf Höhe des Punkts und einem Spannungskoeffizienten, der mit einer Halbtangente zur Kurve auf Höhe des Punkts assoziiert ist.

**5.** Verfahren nach einem der Ansprüche 2 und 4, wobei ein Spannungskoeffizient, der mit einer Halbtangente zur Kurve auf Höhe eines Zwischen- oder Endpunkts assoziiert ist, abhängig ist von einem Wert einer zweiten Ableitung der Kurve in der Umgebung des Punkts.

**6.** Verfahren nach einem der Ansprüche 1 bis 5, wobei die Kurve definiert wird durch *K-1* Zwischenpunkte ($PCU_i$, $i \in [\![1,K-1]\!]$), geordnet gemäß dem Verlauf des Teils des Bauteils (1), und *K* Bezierkurven, mit $K \geq 2$.

**7.** Verfahren nach Anspruch 6, wobei die 1. Bezierkurve auf das Intervall definiert ist, das zwischen dem Endpunkt ($PCU_0$), der mit dem Anfang des Teils des Bauteils (1) assoziiert ist, und dem 1. Zwischenpunkt ($PCU_1$) liegt, die *K*. Bezierkurve auf das Intervall definiert ist, das zwischen dem *K-1.* Zwischenpunkt ($PCU_{K-1}$) und dem Endpunkt ($PCU_K$) liegt, der mit dem Ende des Teils des Bauteils (1) assoziiert ist.

**8.** Verfahren nach Anspruch 7, wobei $K \geq 3$, die oder die i. ($i \in [\![2,K-1]\!]$) Bézierkurven jeweils auf das Intervall definiert sind, das zwischen dem *i-1.* Zwischenpunkt ($PCU_{i-1}$) und dem *i.* Zwischenpunkt ($PCU_i$) liegt.

**9.** Verfahren nach einem der Ansprüche 1 bis 8, wobei jede Bezierkurve vollständig durch die Punkte (PCU) bestimmt wird, die ihre Enden definieren.

## Claims

**1.** A method for manufacturing a part (1), the part (1) being a blading, the method being **characterised in that** it comprises:

- modelling at least one portion of the part (1), the part (1) portion being a sectional portion of the blade (2) of the blading or a height portion of the blade (2) of the blading, comprising the implementation, by data processing means (11) of a piece of equipment (10), of steps of:

(a) parameterising a curve of class $C^1$ representing the value of a physical quantity characterising said part (1) as a function of a position along at least one portion of the part (1), said physical quantity having an aeromechanical and/or acoustic meaning for the design of the part (1), said characteristic physical quantity of said blading (1) is selected from among the thickness of the blading (1), the skeleton, the skeleton angle law of a section of a blade (2) of the blading (1), the maximum thickness law, the position law of the maximum thickness, the sag and dihedral angles, the stacking law, and the upstream/downstream angles of the blade (2) of the blading (1) along the height, the curve being defined by:

a. two end points ($PCU_0$, $PCU_K$) defining the extent of said portion of the part (1);

b. at least one intermediate point ($PCU_i$, $i \in [\![1,K-1]\!]$) positioned between the end points ($PCU_0$, $PCU_K$);

c. at least two Bezier curves connected at said intermediate point;

the parameterisation being applied according to one or several parameters defining said intermediate point;

(b) determining optimised values of said parameters of said curve for a criterion selected from among the resistance to mechanical stresses, the frequency responses of the vane, the displacements of the blade, aerodynamic properties such as efficiency, pressure rise, flow capacity or surge margin;

(c) outputting determined values on an interface (13) of said piece of equipment (10);

- manufacturing said part (1) according to the modelling of the at least one portion of the part (1) obtained.

**2.** The method according to claim 1, wherein the parameter(s) defining an intermediate point ($PCU_i$) is(are) selected from an abscissa of the point, an ordinate of the point, an orientation of the tangent to the curve at the point and two tension coefficients each associated with a half-tangent to the curve at the point.

**3.** The method according to one of claims 1 and 2, wherein the parameterisation is also applied according to one or several parameters defining at least one of the end points ($PCU_0$, $PCU_K$).

**4.** The method according to claim 3, wherein the parameter(s) defining an end point ($PCU_0$, $PCU_K$) is/are selected from an abscissa of the point, an ordinate of the point, an orientation of the tangent to the curve at the point and one tension coefficient associated with a half-tangent to the curve at the point.

**5.** The method according to one of claims 2 and 4, wherein a tension coefficient associated with a half-tangent to the curve at an intermediate or end point depends on a second derivative value of the curve in the vicinity of the point.

**6.** The method according to one of claims 1 to 5, wherein said curve is defined by *K-1* intermediate points ($PCU_i$, $i \in [\![1, K-1]\!]$) ordered along the travel of said portion of the part (1), and *K* Bezier curves, with $K \geq 2$.

**7.** The method according to claim 6, wherein the 1st Bezier curve is defined on the interval comprised between the end point ($PCU_0$) associated with the beginning of said portion of the part (1) and the 1st intermediate point ($PCU_1$), the $K^{th}$ Bezier curve is defined on the interval comprised between the $K\text{-}1^{th}$ intermediate point ($PCU_{K-1}$) and the end point ($PCU_K$) associated with the end of said portion of the part (1).

**8.** The method according to claim 7, wherein $K \geq 3$, the $i^{th}$ Bezier curve(s) ($i \in [\![2, K-1]\!]$) each being defined on the interval comprised between the $i\text{-}1^{th}$ intermediate point ($PCU_{i-1}$) and the $i^{th}$ intermediate point ($PCU_i$).

**9.** The method according to one of claims 1 to 8, wherein each Bezier curve is entirely determined by the points (PCU) defining its ends.

FIG. 1a

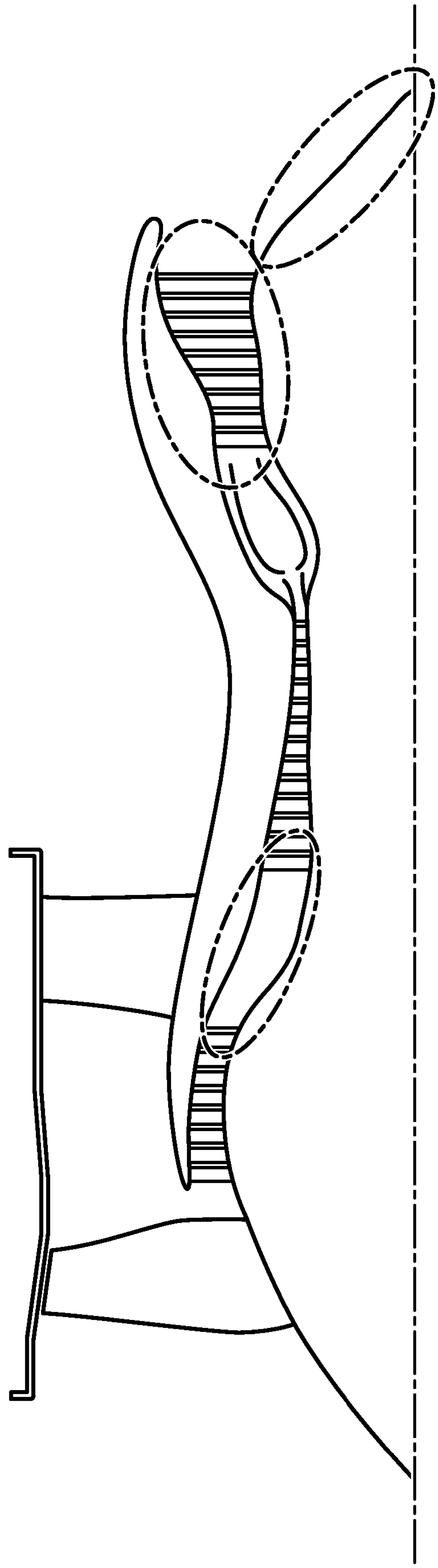

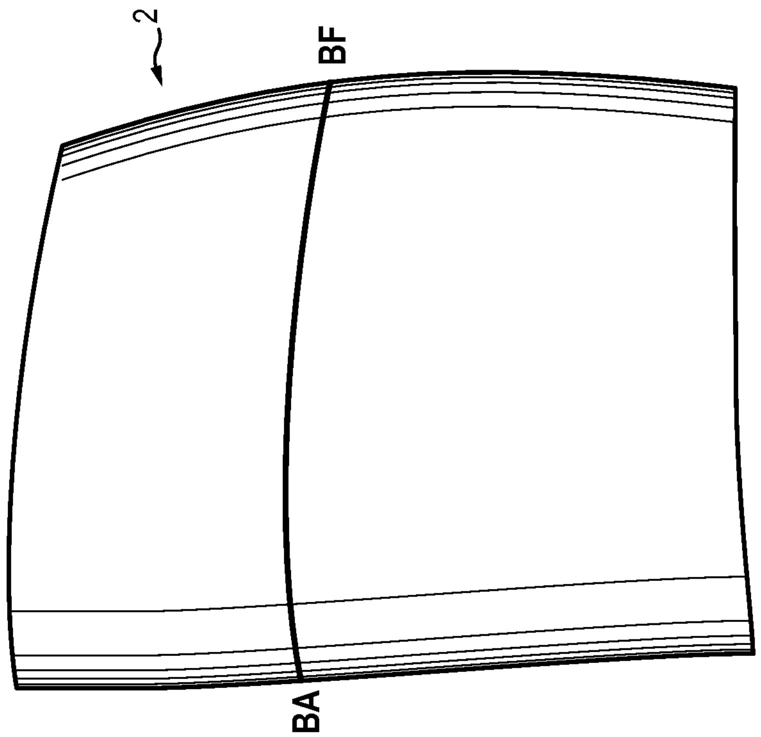


FIG. 1c

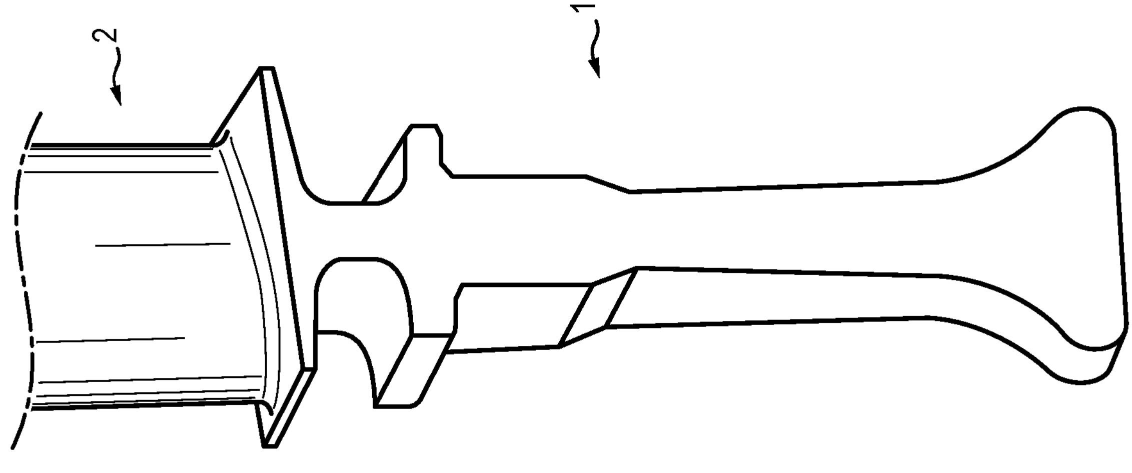


FIG. 1b

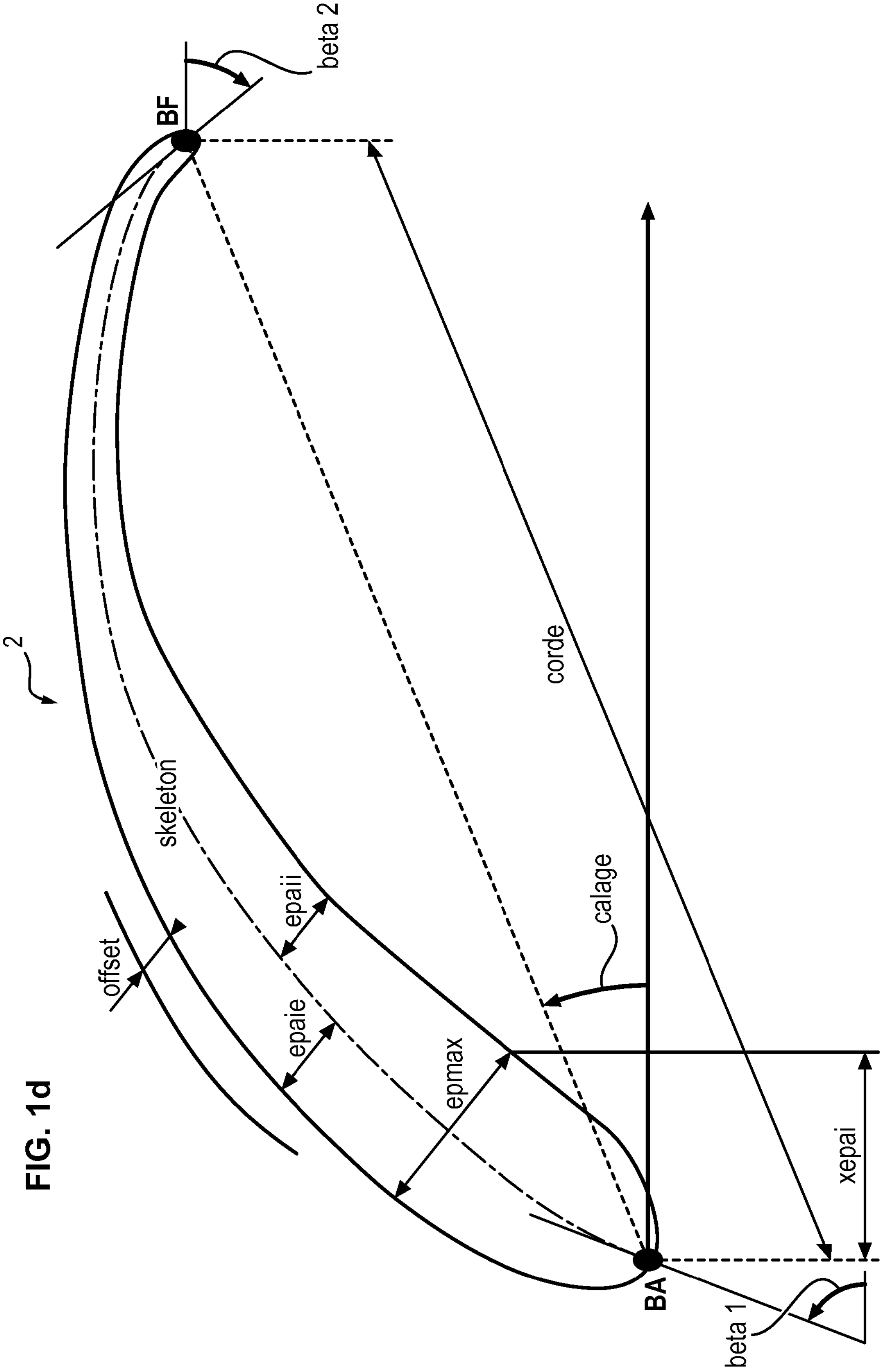
beta 2
BF
2
skeleton
corde
calage
offset
epaii
epaie
epmax
xepai
BA
beta 1

FIG. 1d

Art antérieur
FIG. 2a

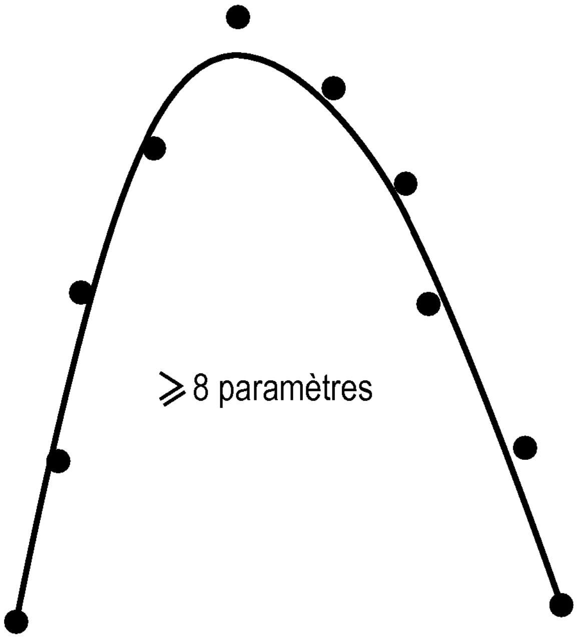


FIG. 2b

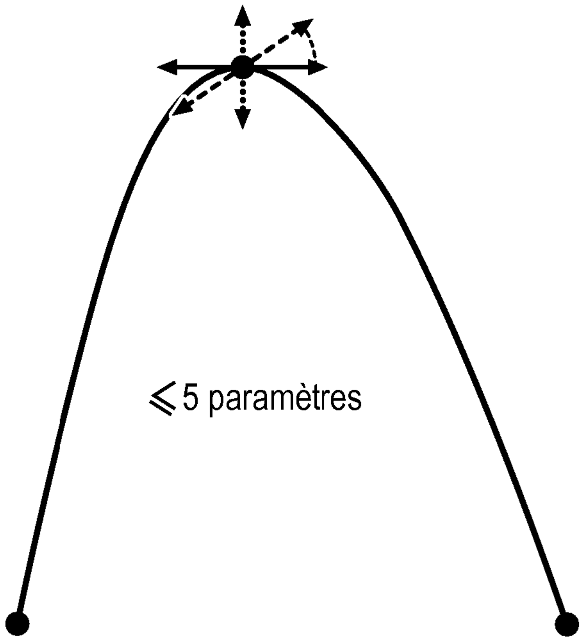


FIG. 3

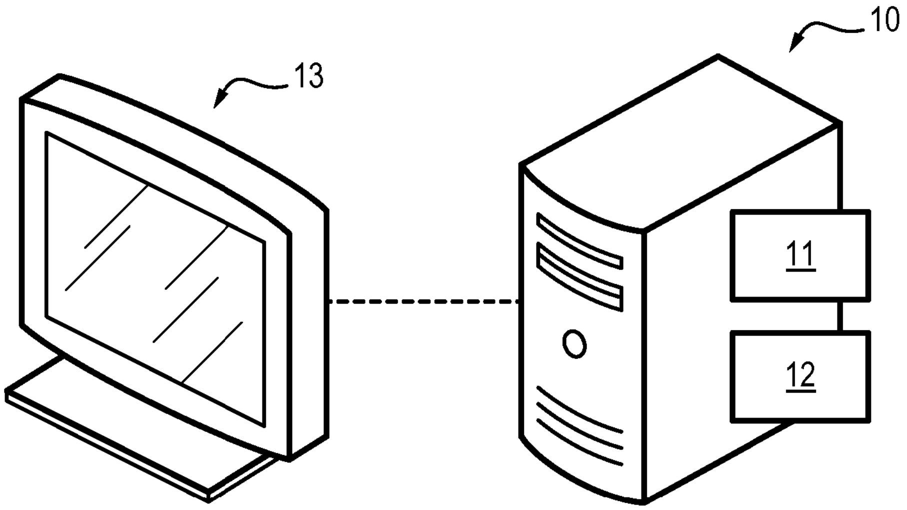

FIG. 4

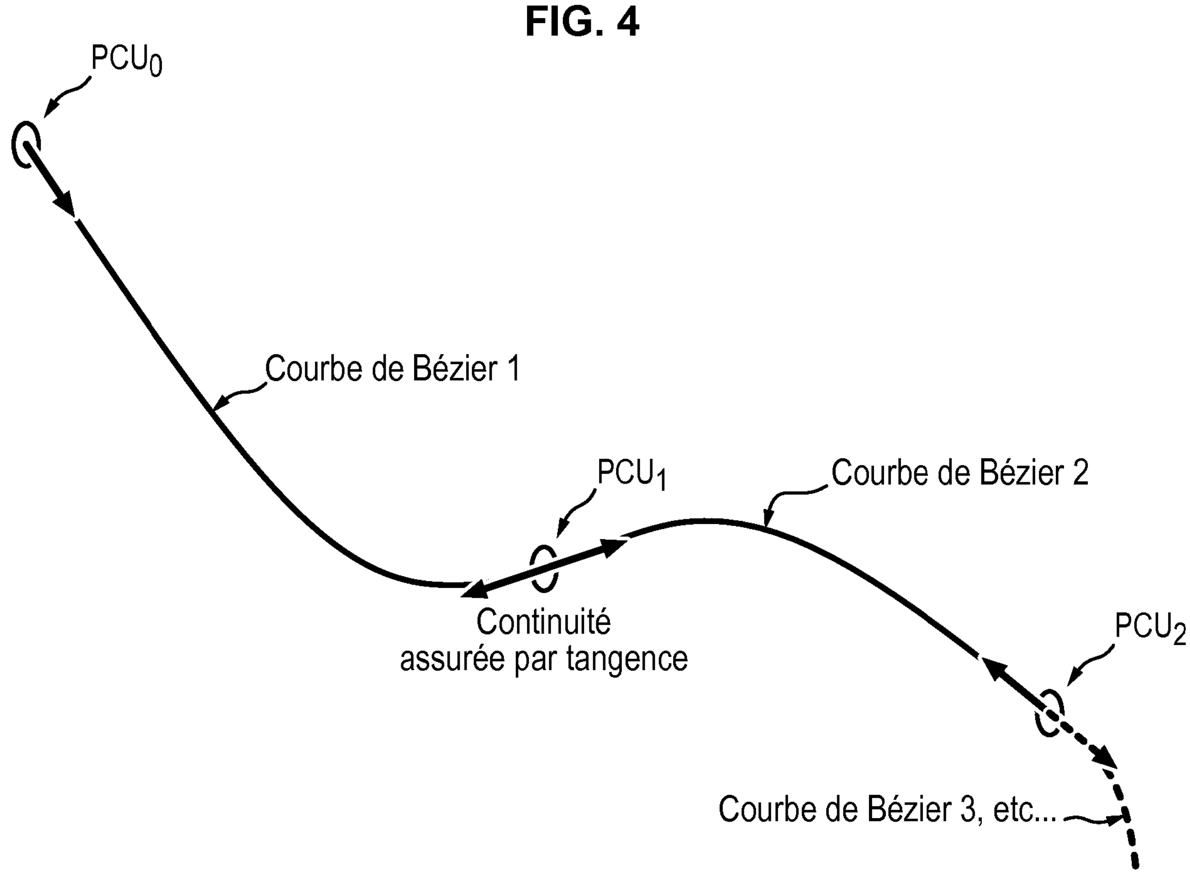
PCU0
Courbe de Bézier 1
PCU1
Courbe de Bézier 2
Continuité
assurée par tangence
PCU2
Courbe de Bézier 3, etc...

FIG. 5a

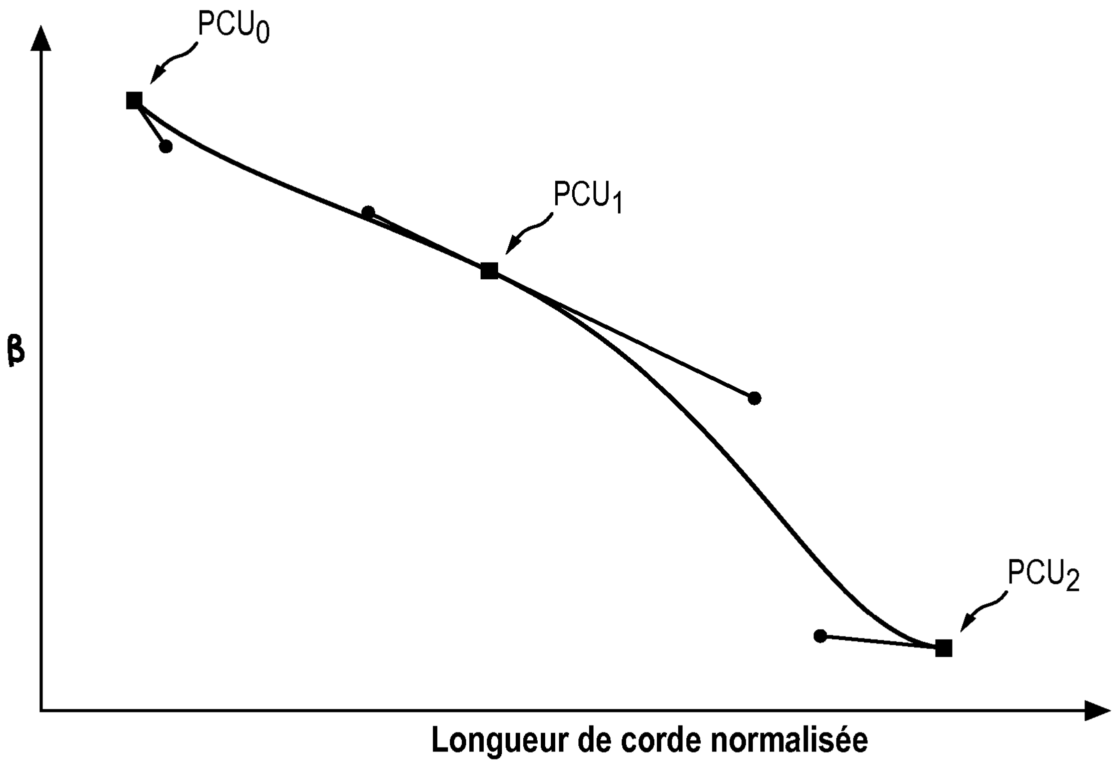
PCU0
PCU1
β
PCU2
Longueur de corde normalisée

FIG. 5b

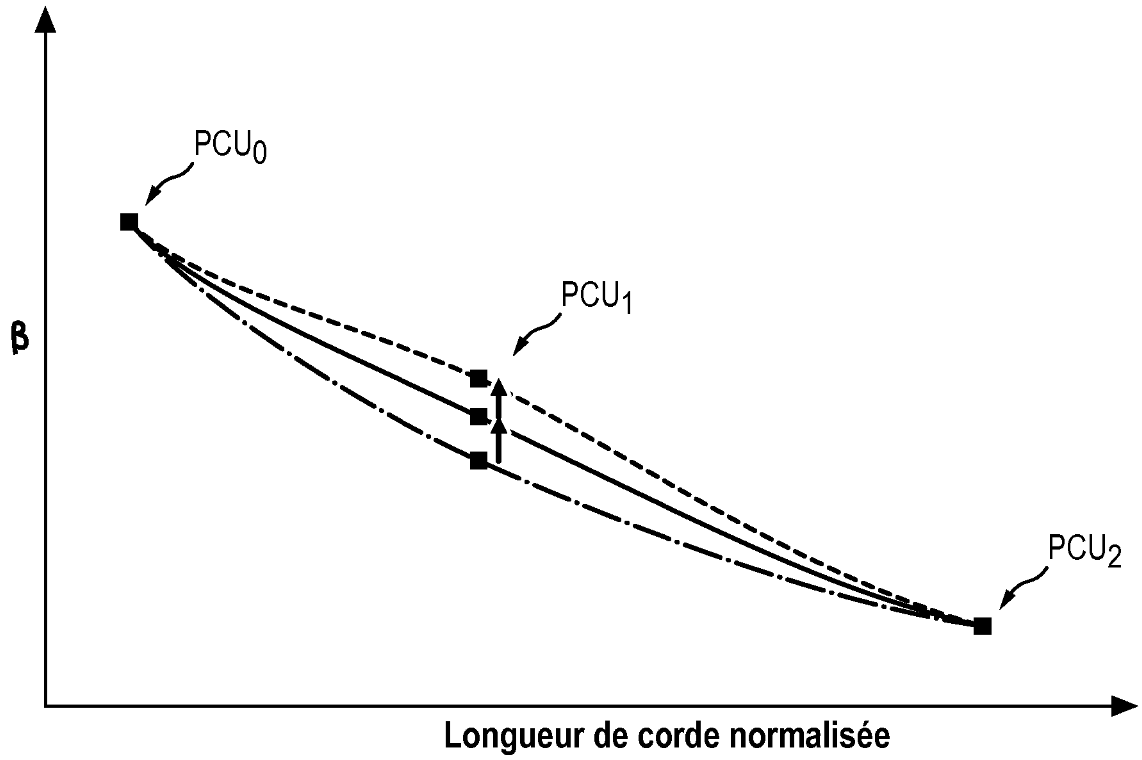
β
$PCU_0$
$PCU_1$
$PCU_2$
Longueur de corde normalisée

FIG. 5c

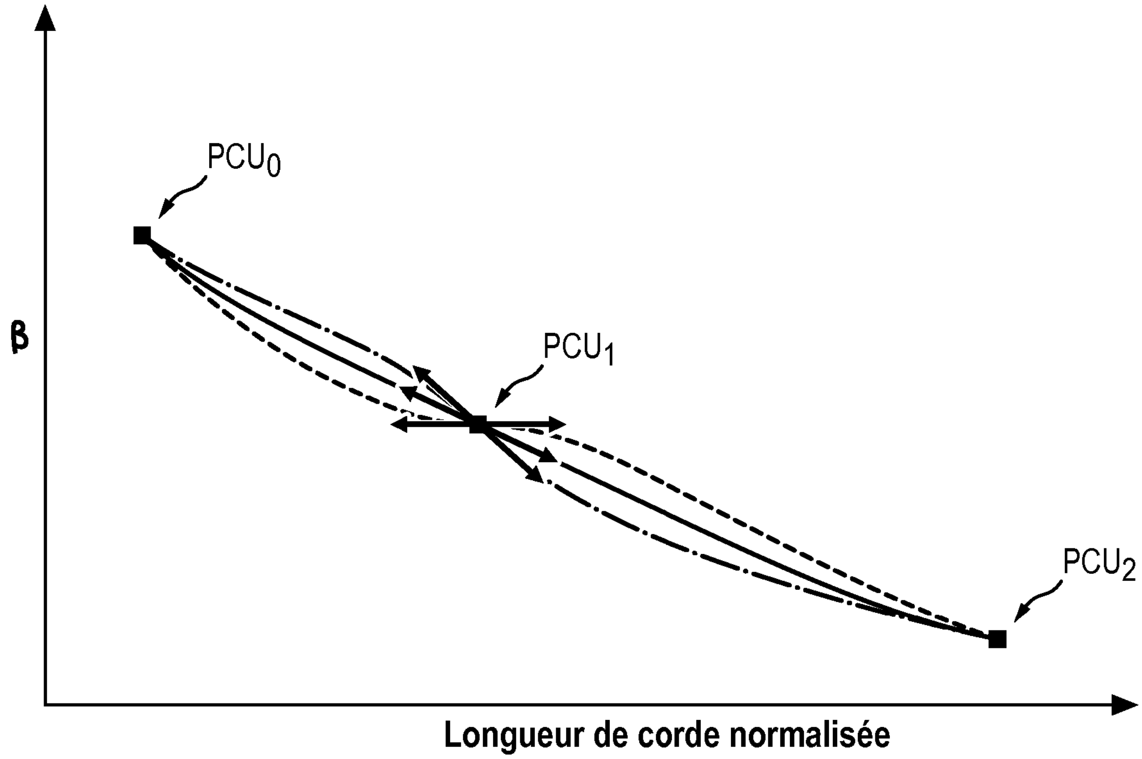
β
$PCU_0$
$PCU_1$
$PCU_2$
Longueur de corde normalisée

FIG. 5d

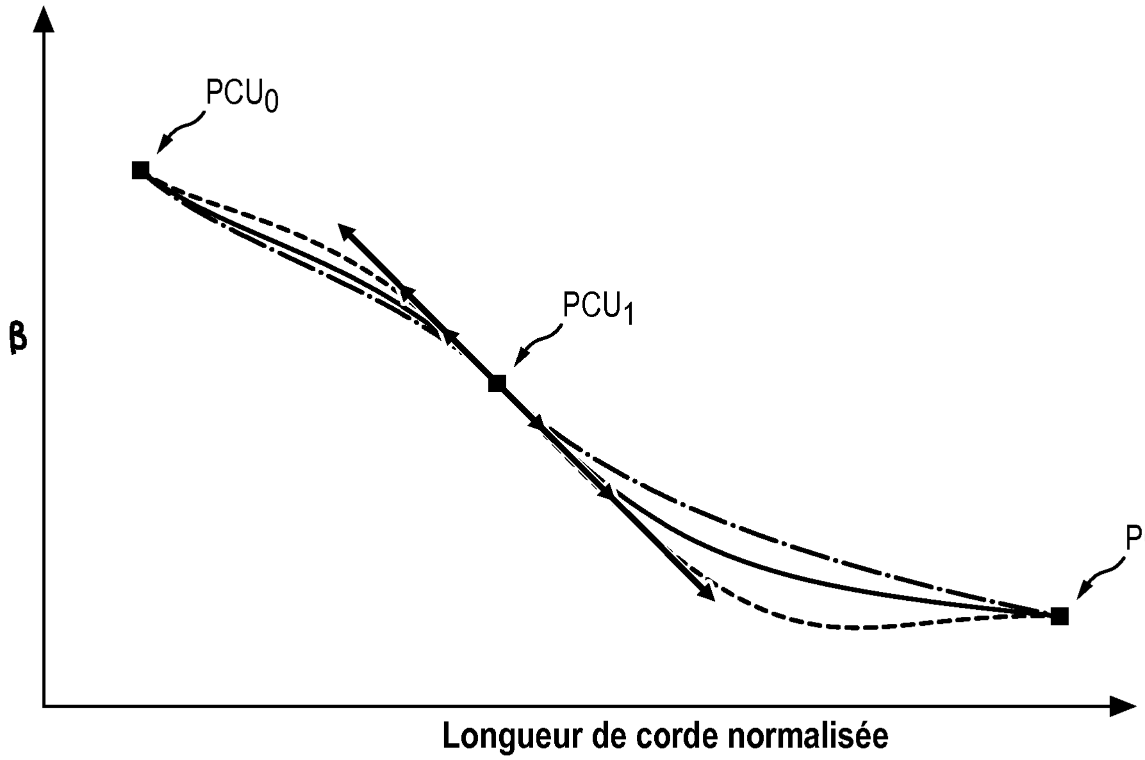
PCU$_0$
PCU$_1$
PCU$_2$
β
Longueur de corde normalisée

FIG. 5e

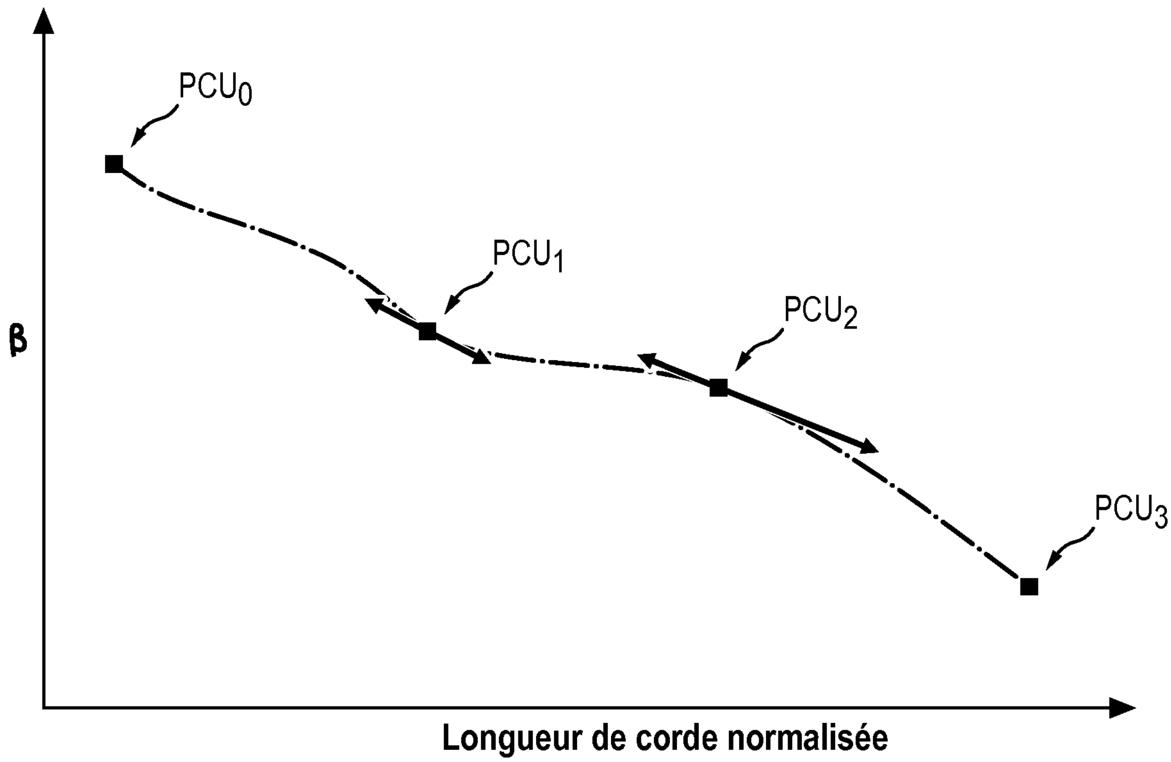
PCU$_0$
PCU$_1$
PCU$_2$
PCU$_3$
β
Longueur de corde normalisée

FIG. 6a

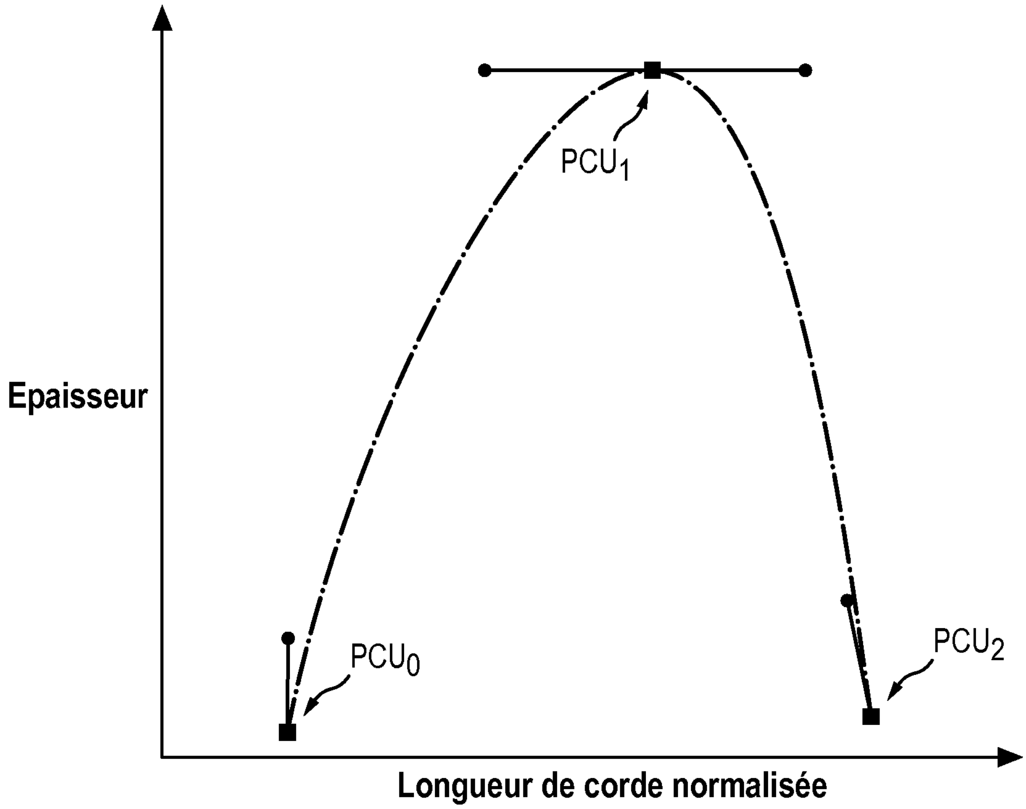
PCU1
Epaisseur
PCU0
PCU2
Longueur de corde normalisée

FIG. 6b

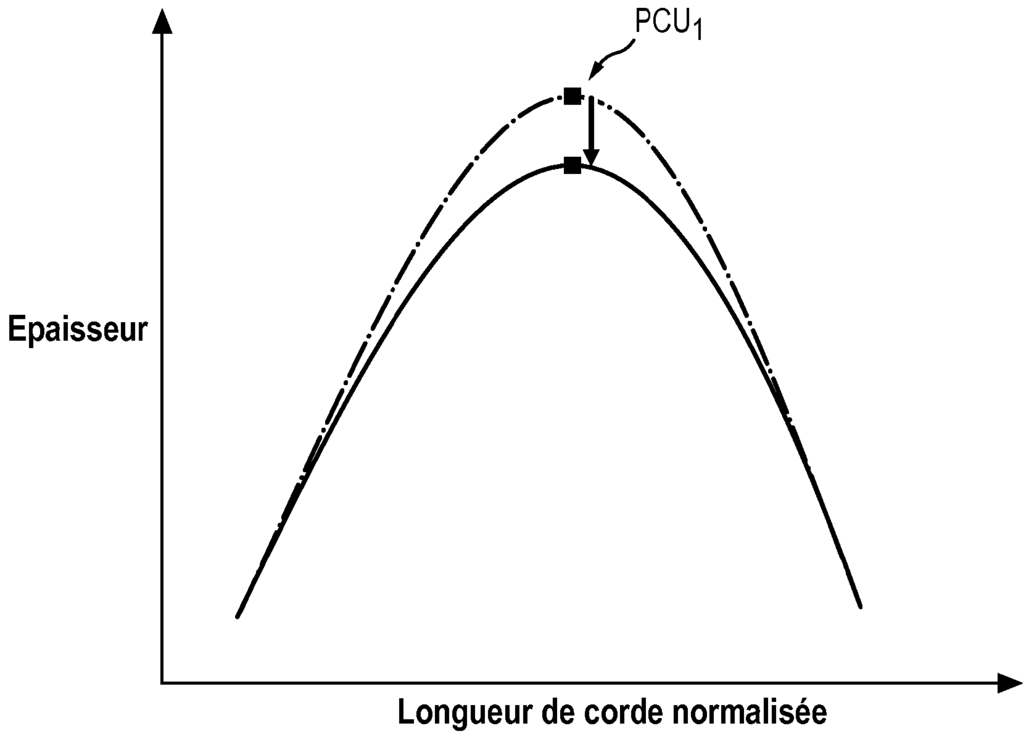
PCU1
Epaisseur
Longueur de corde normalisée

FIG. 6c

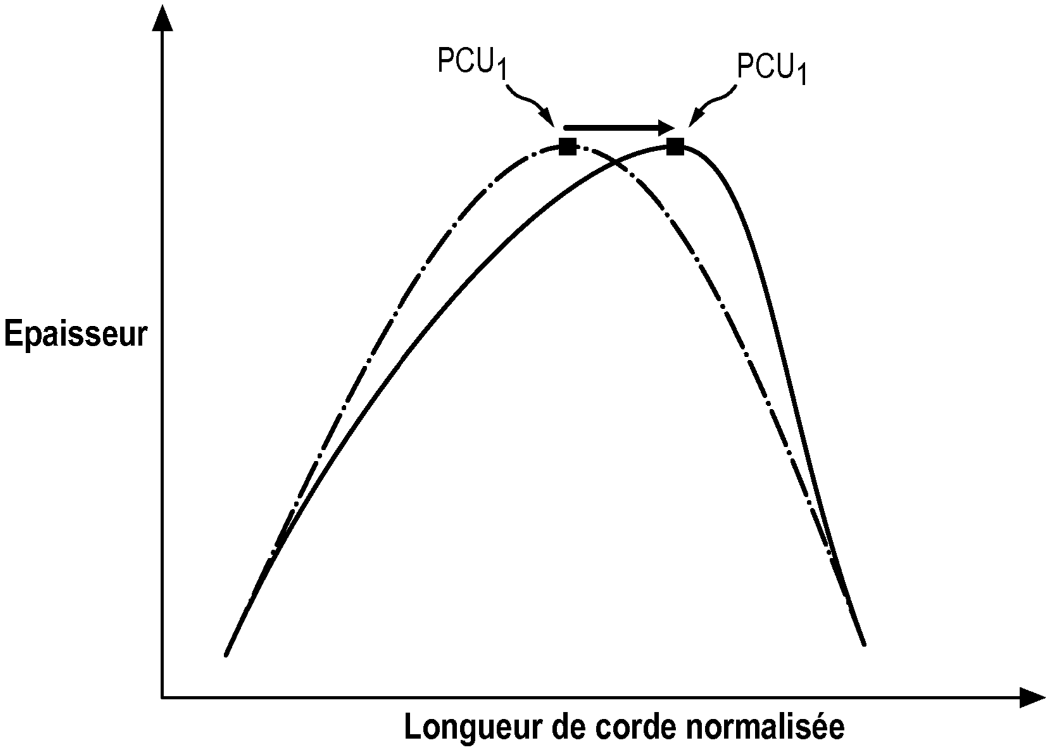
PCU1
PCU1
Epaisseur
Longueur de corde normalisée

FIG. 6d

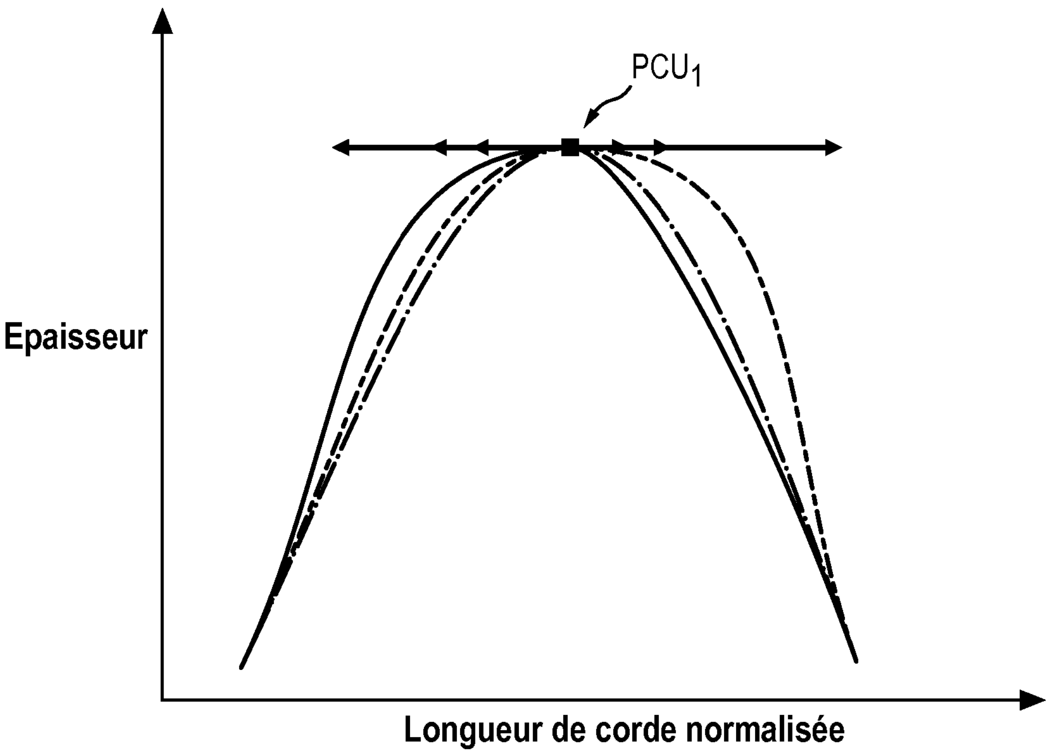
PCU1
Epaisseur
Longueur de corde normalisée

FIG. 6e

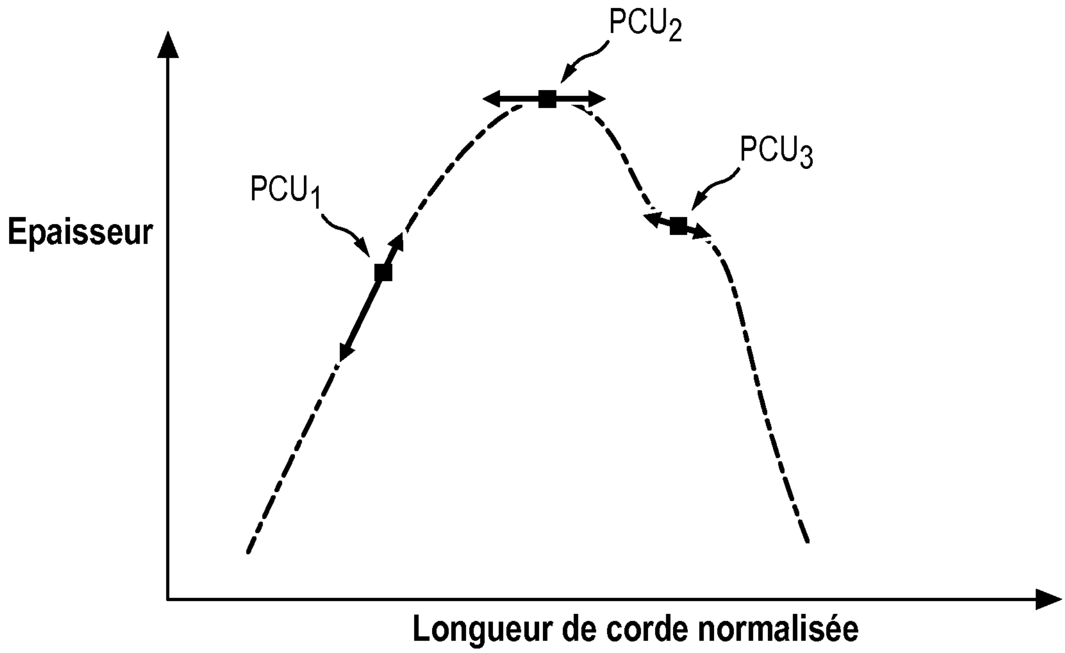

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **K C GIANNAKOGLOU.** A Design Method For Turbine Blades Using Genetic Algorithms On Parallel Computers. *Computational Fluid Dynamics,* 01 Janvier 1998, 1-6